# EUROPÄISCHE PATENTSCHRIFT

(11) **EP 3 275 578 B1**
(45) Veröffentlichungstag und Bekanntmachung des Hinweises auf die Patenterteilung: **27.02.2019**
(21) Anmeldenummer: 17162011.5
(22) Anmeldetag: 21.03.2017
(51) Int. Cl.: B23B 31/26, B23B 31/20, B23B 31/28

(54) **SPANN-LÖSEEINHEIT**
TENSION RELEASE UNIT
UNITÉ DE SERRAGE/DESSERRAGE

(30) Priorität: 28.07.2016 DE 102016113992
(43) Veröffentlichungstag der Anmeldung: 31.01.2018
(73) Patentinhaber: Röhm GmbH, 89567 Sontheim/Brenz (DE)
(72) Erfinder: Schweigert, Eduard, 89428 Syrgenstein (DE)
(74) Vertreter: Hentrich Patentanwälte PartG mbB

(56) Entgegenhaltungen:
- DE-A1- 19 840 244
- DE-A1-102005 049 377

## Beschreibung

Die Erfindung betrifft eine Spann-Löseeinheit mit einem Grundkörper, in dem in einer Zylinderkammer ein zum Einwirken auf eine Stange der Spann-Löseeinheit vorgesehener Kolben druckmittelbetätigt verstellbar angeordnet ist.

Eine derartige Spann-Löseeinheit geht beispielsweise aus der DE 10 2005 049 377 A1 hervor.

Aus der Praxis bekannt und beispielsweise in der DE 10 2005 049 377 A1 beschrieben, sind Verriegelungssysteme als Verbindungsglied zwischen einem HSK-Spannsatz und der Betätigungsstange, bei der die herkömmlichen Federpakete überflüssig sind und eingespart werden können, weil die axiale Lage der Stange in der Spannstellung durch Selbsthemmung gesichert ist. Der damit verbundene Vorteil muss allerdings damit erkauft werden, dass keine konventionelle Löseeinheit eingesetzt werden kann, sondern eine Spann-Löseeinheit erforderlich ist, um beim Spannen die Stange in die Position zu verstellen, in der die Selbsthemmung gegeben ist, und im Übrigen unter Überwindung der Selbsthemmung die Verstellung der Stange in der dem Lösen entsprechenden Richtung wie bei einer konventionellen Löseeinheit möglich ist. Da der Grundkörper der Spann-Löseeinheit stationär ist, während die Stange sich mit dem HSK-Spannsatz mitdreht, muss für den Betrieb gewährleistet sein, dass die Stange sich gegenüber dem Grundkörper frei drehen kann.

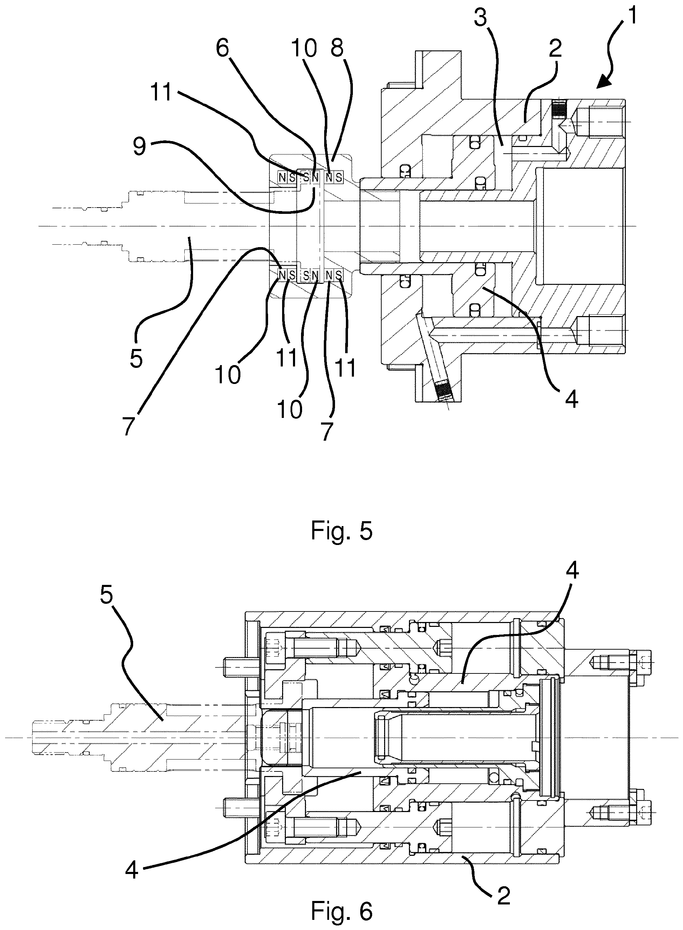

Eine diese Anforderungen erfüllende, aus dem Stand der Technik bekannte Spann-Löseeinheit ist in der aus Fig. 6 gezeigt, die als Doppelkolbenzylinder ausgeführt ist und für die Maschinensteuerung eine zusätzliche Steuerleitung benötigt wird, um den ordnungsgemäßen Betrieb zu gewährleisten.

Es ist Aufgabe der Erfindung, eine Spann-Löseeinheit der eingangs genannten Art so auszubilden, dass deren Aufbau vereinfacht und damit eine kostengünstigere Fertigung ermöglicht ist.

Diese Aufgabe wird bei einer Spann-Löseeinheit der eingangs genannten Art dadurch gelöst, dass mindestens ein erstes Repulsivelement der Spann-Löseeinheit vorgesehen ist, das zwischen einem zugeordneten Paar zweiter Repulsivelemente der Spann-Löseeinheit angeordnet ist, und dass das mindestens erste Repulsivelement an einem Ringbund der Stange oder des Kolbens und das Paar zweiter Repulsivelemente an den anderen Teil von Kolben oder Stange ausgebildet sind.

Diese erfindungsgemäße Spann-Löseeinheit zeichnet sich dadurch aus, dass deren Komplexität gegenüber einer konventionellen Löseeinheit kaum gesteigert ist und die Verstellung der Stange in die Betriebszustände des Spannens und Lösens allein durch den Kolben erfolgen kann. Für den Betriebszustand der Bearbeitung kann der Kolben drucklos geschaltet werden, wobei durch das Zusammenwirken der Repulsivelemente die Stange eine Mittelstellung einnimmt, in der diese keinen Kontakt zu der Wandung der stationären, nicht drehenden Bauteile hat. Zu beachten ist dabei, dass durch die Umfassung des ersten Repulsivelementes durch zwei paarweise angeordnete zweite Repulsivelemente eine Abstoßung in beide Verstellrichtungen der Stange erfolgt, um so die Mittelstellung mit gleichmäßigem Abstand von der Wandung des die zweiten Repulsivelemente tragenden Bauteils zu gewährleisten.

Ganz besonders bevorzugt im Rahmen der Erfindung ist es, wenn das erste Repulsivelement durch einen Magneten gebildet ist, dass die zweiten Repulsivelemente durch zwei Magneten gebildet sind und dass die Anordnung der zweiten Repulsivelemente gegenüber dem ersten Repulsivelement so getroffen ist, dass gleichnamige Pole zueinander weisen. Ganz besonders zweckmäßig ist dabei, wenn das erste Repulsivelement und/oder die zweiten Repulsivelemente durch Permanentmagnete gebildet sind. Mit dieser Anordnung lässt sich in einfacher Weise dauerhaft die gewünschte abstoßende Wirkung zwischen dem ersten Repulsivelement und den zweiten Repulsivelementen erreichen und ausnutzen, dass Magnete stets mit Nord- und Südpol vorliegen, so dass das eine zweite Repulsivelement mit seinem Nordpol zu dem Nordpol des ersten Repulsivelements weisen kann und dem Südpol des ersten Repulsivelements der Südpol des anderen zweiten Repulsivelements gegenüberliegen kann.

Vorteilhaft ist es weiterhin, wenn die Magnete ringförmig ausgebildet sind. Da die Stange bestimmungsgemäß sich gegenüber dem Grundkörper und dem Kolben verdrehen soll und so das Gegenüberliegen des ersten Repulsivelements und dem Paar zweiter Repulsivelemente unabhängig von der Drehlage der Stange gegenüber dem Kolben bzw. dem Grundkörper gewährleistet ist.

Alternativ besteht auch die Möglichkeit, dass das erste Repulsivelement und das zugeordnete Paar zweiter Repulsivelemente mehrfach vorgesehen sind in einer gleismäßig über den Umfang verteilten Anordnung. Dabei ist die Anzahl so getroffen, dass in jeder Drehlage der Stange die ersten Repulsivelemente der Wirkung der zweiten Repulsivelemente ausgesetzt ist.

Grundsätzlich besteht statt der Verwendung von Magneten auch die Möglichkeit, dass das erste Repulsivelement durch eine Elektrode mit einer ersten elektrischen Ladung gebildet ist und dass das Paar zweiter Repulsivelemente durch zwei Elektroden mit gleichnamiger Ladung gegenüber der ersten Elektrode gebildet ist. Mit dieser Ausführungsform kann in gleicher verlässlicher Weise die gewünschte Abstoßungswirkung durch den Einfluss elektrostatischer Kräfte erzielt werden, wobei insbesondere auch die Möglichkeit besteht, die der Stange zugeordnete Elektrode dauerhaft geladen bereitzustellen, während die anderen Elektroden bedarfsweise geladen und entladen werden und insbesondere über die Höhe der Ladung auch die Größe der wirkenden Kräfte beeinflusst werden kann.

Im Folgenden wird die Erfindung an einem in der Zeichnung dargestellten Ausführungsbeispiel näher erläutert; es zeigen:
- Fig. 1: eine Vorderansicht der erfindungsgemäßen Spann-Löseeinheit,
- Fig. 2: eine aus dem Stand der Technik bekannte Löseeinheit, entsprechend dem Schnitt A-A aus Fig. 1
- Fig. 3: die erfindungsgemäße Spann-Löseeinheit gemäß dem Schnitt A-A aus Fig. 1 in der Lösestellung,
- Fig. 4: die Spann-Löseeinheit aus Fig. 3 in der Spannstellung,
- Fig. 5: die Spanneinheit aus Fig. 3 in der Neutralstellung, und
- Fig. 6: einen Querschnitt durch eine aus dem Stand der Technik bekannte Spann-Löseeinheit, aufgebaut als Doppelkolbenzylinder.

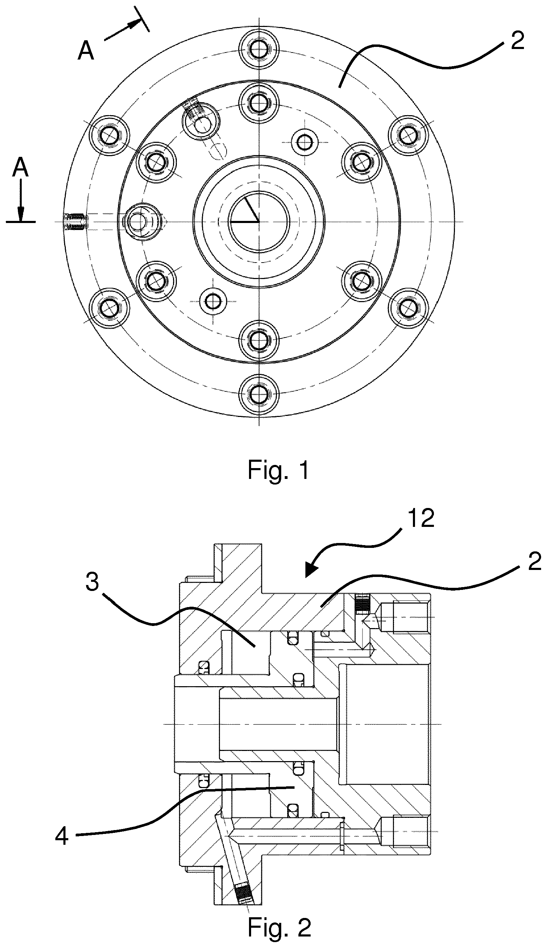

In der Zeichnung ist in den Fig. 1 und 3 bis 5 eine erfindungsgemäße Spann-Löseeinheit 1 gezeigt, die einen Grundkörper 2 aufweist, in dem in einer Zylinderkammer 3 ein zum Einwirken auf eine Stange 5 vorgesehener Kolben 4 druckmittelbetätigt verstellbar angeordnet ist. Bei dem in der Zeichnung dargestellten Ausführungsbeispiel ist der Stange 5 ein erstes Repulsivelement 6 zugeordnet, das zwischen einem Paar zweiter Repulsivelemente 7 angeordnet ist, die dem Kolben 4 bzw. einer Extension 8 des Kolbens 4 zugeordnet sind. Weiterhin ist erkennbar, dass das erste Repulsivelement 6 an einem Ringbund 9 der Stange 5 platziert ist, so dass zwei in axialer Richtung weisende Flächen bereitstehen, denen gegenüberliegend die zweiten Repulsivelemente 7 angeordnet werden können.

Bei dem in der Zeichnung dargestellten Ausführungsbeispiel sind das erste Repulsivelement 6 durch einen Magneten, nämlich einem Permanentmagneten, und die zweiten Repulsivelemente 7 gleichfalls durch Magnete, nämlich Permanentmagnete gebildet. Dabei ist die Anordnung der zweiten Repulsivelemente 7 gegenüber dem ersten Repulsivelement 6 so getroffen, dass gleichnamige Pole zueinander weisen. In der Zeichnung ist für das Ausführungsbeispiel ersichtlich, dass das erste Repulsivelement 6 in dem Ringbund 9 der Stange 5 mit seinem Nordpol 10 Richtung Kolben 4 weist. Dementsprechend ist das kolbenseitige zweite Repulsivelement 7 mit seinem Nordpol 10 zum ersten Repulsivelement 6 gerichtet, während das zweite Repulsivelement 7, auf der dem Kolben 4 abgewandten Seite des Ringbundes 9 mit seinem Südpol 11 zu dem Südpol 11 des ersten Repulsivelementes 6 gerichtet ist.

Bei dem in der Zeichnung dargestellten Ausführungsbeispiel sind die Magnete ringförmig ausgebildet. Alternativ besteht allerdings auch die Möglichkeit, das erste Repulsivelement 6 und das zugeordnete Paar zweiter Repulsivelemente 7 mehrfach vorzusehen in einer gleichmäßig über den Umfang von Achse und Kolben 4 der Stange 5 verteilten Anordnung.

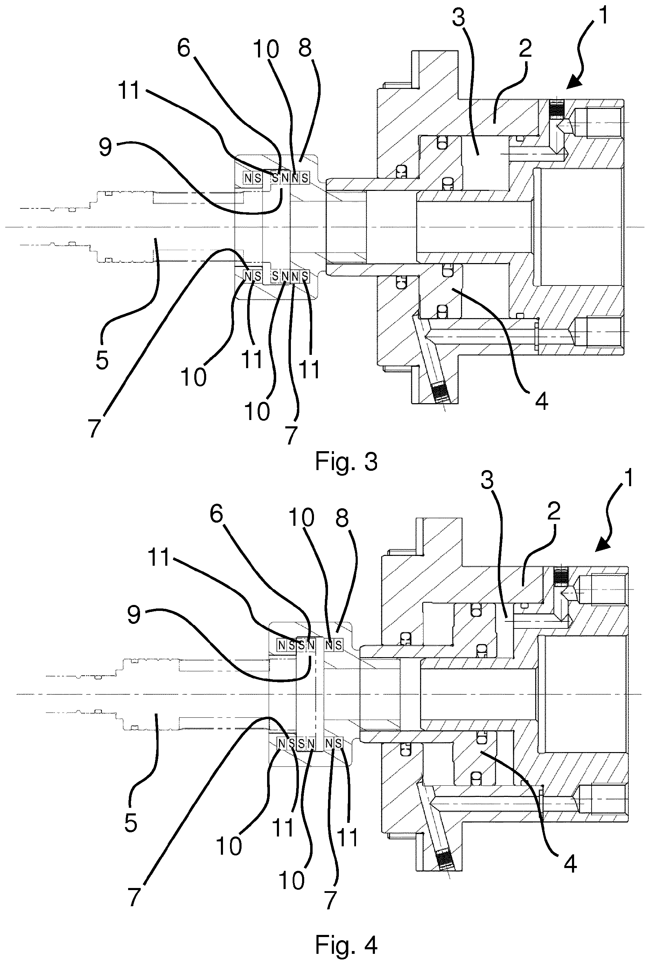

Die Fig. 3 zeigt dabei die Lösestellung der Spann-Löseeinheit 1, bei der durch das Druckmittel der Kolben 4 so verstellt ist, dass die Kraftübertragung zur Überwindung der Selbsthemmung durch unmittelbaren Kontakt mit der Stange 5 erfolgt.

Fig. 4 zeigt die Spannstellung, bei der zur Generierung der Selbsthemmung der Spannmittel gleichfalls unmittelbarer Kontakt zwischen dem Kolben 4 und der Stange 5 besteht. Sowohl in der Lösestellung als auch in der Spannstellung wird die abstossende Kraft der Magnete durch das den Kolben 4 beaufschlagende Druckmittel überwunden.

Fig. 5 zeigt die Neutralstellung, in der der Kolben 4 drucklos geschaltet ist. Die Magnete bewirken eine Stellung der Stange 5, bei der kein Kontakt zur Wandung stationärer Teile gegeben ist und so die Stange 5 verdreht werden kann.

Der Vergleich der erfindungsgemäßen Spann-Löseeinheit 1 aus Fig. 3 mit der konventionellen Löseeinheit 12 aus Fig. 2 zeigt, dass ein grundsätzlich gleicher Aufbau vorliegt und die Komplexität gegenüber der simplen Löseeinheit 12 nur geringfügig gesteigert ist, da dem Kolben 4 als Träger der zweiten Repulsivelemente 7 ein Adapterglied zugeordnet werden muss. Damit ergibt sich aber auch die Möglichkeit, dass vorbekannte Löseeinheiten 12 in einfacher Weise umgebaut und nachgerüstet werden können, so dass bei einem Wechsel zu einem Verriegelungssystem ohne Federpaket die existierende Löseeinheit 12 weiter genutzt und zur Spann-Löseeinheit 1 der erfindungsgemäßen Art umgebaut werden kann.

### Bezugszeichenliste

- 1: Spann-Löseeinheit
- 2: Grundkörper
- 3: Zylinderkammer
- 4: Kolben
- 5: Stange
- 6: erstes Repulsivelement
- 7: zweites Repulsivelement
- 8: Extension
- 9: Ringbund
- 10: Nordpol
- 11: Südpol
- 12: Löseeinheit

## Patentansprüche

1. Spann-Löseeinheit mit einem Grundkörper (2), in dem in einer Zylinderkammer (3) ein zum Einwirken auf eine Stange (5) der Spann-Löseeinheit vorgesehener Kolben (4) druckmittelbetätigt verstellbar angeordnet ist, **dadurch gekennzeichnet, dass** mindestens ein erstes Repulsivelement (6) der Spann-Löseeinheit vorgesehen ist, das zwischen einem zugeordneten Paar zweiter Repulsivelemente (7) der Spann-Löseeinheit angeordnet ist, und dass das mindestens erste Repulsivlelement (6) an einem Ringbund (9) der Stange (5) oder des Kolbens (4) und das Paar zweiter Repulsivelemente (7) an dem anderen Teil von Kolben (4) oder Stange (5) ausgebildet sind.

2. Spann-Löseeinheit nach Anspruch 1, **dadurch gekennzeichnet, dass** das erste Repulsivelement (6) durch einen Magneten gebildet ist, dass die zweiten Repulsivelemente (7) durch zwei Magneten gebildet sind, und dass die Anordnung der zweiten Repulsivelemente (7) gegenüber dem ersten Repulsivelement (6) so getroffen ist, das gleichnamige Pole zueinander weisen.

3. Spann-Löseeinheit nach Anspruch 2, **dadurch gekennzeichnet, dass** das erste Repulsivelement (6) und/oder die zweiten Repulsivelemente (7) durch Permantentmagnete gebildet sind.

4. Spann-Löseeinheit nach Anspruch 2 oder 3, **dadurch gekennzeichnet, dass** die Magnete ringförmig ausgebildet sind.

5. Spann-Löseinheit nach einem der Ansprüche 1 bis 3, **dadurch gekennzeichnet, dass** das erste Repulsivelement (6) und das zugeordnete Paar zweiter Repulsivelemente (7) mehrfach vorgesehen sind in einer gleichmäßig über den Umfang verteilten Anordnung.

6. Spann-Löseeinheit nach Anspruch 1, **dadurch gekennzeichnet, dass** das erste Repulsivelement (6) durch eine Elektrode mit einer ersten elektrischen Ladung gebildet ist, und dass das Paar zweiter Repulsivelemente (7) durch zwei Elektroden mit gleichnamiger Ladung gegenüber der ersten Elektrode gebildet ist.

## Claims

1. Clamping-release unit with a base body (2), in which in a cylinder chamber (3) an adjustable piston (4) actuated via a pressurized medium is provided for acting on a rod (5) of the clamping-release unit, **characterized in that** at least a first repulsive element (6) of the clamping-release unit is provided which is arranged between an associated pair of second repulsive elements (7) of the clamping-release unit, and **in that** the at least first repulsive element (6) is formed on an annular collar (9) of the rod (5) or of the piston (4) and the pair of second repulsive elements (7) are formed on the other part from piston (4) or rod (5).

2. Clamping-release unit according to claim 1, **characterized in that** the first repulsive element (6) is formed by a magnet, that the second repulsive elements (7) are formed by two magnets, and that the arrangement of the second repulsive elements (7) relative to the first repulsive element (6) is made so that the poles of the same name point to each other.

3. Clamping-release unit according to claim 2, **characterized in that** the first repulsive element (6) and / or the second repulsive elements (7) are formed by permanent magnets.

4. Clamping-release unit according to claim 2 or 3, **characterized in that** the magnets are annular.

5. Clamping-release unit according to one of claims 1 to 3, **characterized in that** the first repulsive element (6) and the associated pair of second repulsive elements (7) are provided several times in an arrangement uniformly distributed over the circumference.

6. Clamping-release unit according to claim 1, **characterized in that** the first repulsive element (6) is formed by an electrode having a first electrical charge, and **in that** the pair of second repulsive elements (7) is formed by two electrodes of like charge with respect to the first electrode.

## Revendications

1. Unité de serrage-desserrage comprenant un corps de base (2) dans lequel il est prévu, dans une chambre de vérin (3), un piston (4) pouvant être déplacé sous l'action d'un fluide sous pression et destiné à agir sur une tige (5) de l'unité de serrage-desserrage, **caractérisée en ce qu'**il est prévu au moins un premier élément à répulsion (6) de l'unité de serrage-desserrage, qui est disposé entre une paire associée de deuxièmes éléments à répulsion (7) de l'unité de serrage-desserrage, et **en ce que** le au moins premier élément à répulsion (6) est formé sur un collet annulaire (9) de la tige (5) ou du piston (4), et la paire de deuxièmes éléments à répulsion (7) est formée sur l'autre partie du piston (4) ou de la tige (5).

2. Unité de serrage-desserrage selon la revendication 1, **caractérisée en ce que** le premier élément à répulsion (6) est constitué d'un aimant, **en ce que** les deuxièmes éléments à répulsion (7) sont constitués de deux aimants, et **en ce que** la disposition des deuxièmes éléments à répulsion (7) par rapport au premier élément à répulsion (6) est prévue telle que les pôles de même polarité soient tournés les uns en direction des autres.

3. Unité de serrage-desserrage selon la revendication 2, **caractérisée en ce que** le premier élément à répulsion (6) et/ou les deuxièmes éléments à répulsion (7) sont constitués d'aimants permanents.

4. Unité de serrage-desserrage selon la revendication 2 ou 3, **caractérisée en ce que** les aimants sont réalisés sous forme d'anneaux.

5. Unité de serrage-desserrage selon l'une des revendications 1 à 3, **caractérisée en ce que** le premier élément à répulsion (6) et la paire associée de deuxièmes éléments à répulsion (7) sont prévus plusieurs fois, dans une configuration répartie de façon régulière sur le pourtour.

6. Unité de serrage-desserrage selon la revendication 1, **caractérisée en ce que** le premier élément à répulsion (6) est constitué d'une électrode avec une première charge électrique, et **en ce que** la paire de deuxièmes éléments à répulsion (7) est constituée de deux électrodes avec une charge de même polarité par rapport à la première électrode.
